(19) Europäisches Patentamt European Patent Office Office européen des brevets

(11) **EP 4 779 755 A1**

(12) **EUROPEAN PATENT APPLICATION**
published in accordance with Art. 153(4) EPC

(43) Date of publication:
**22.07.2026 Bulletin 2026/30**

(21) Application number: **24948081.5**

(22) Date of filing: **02.12.2024**

(51) International Patent Classification (IPC):
*H01M 10/54* (2006.01)        *B09B 3/40* (2022.01)
*B09B 3/70* (2022.01)         *B09B 101/15* (2022.01)

(52) Cooperative Patent Classification (CPC):
Y02W 30/84

(86) International application number:
**PCT/KR2024/019473**

(87) International publication number:
**WO 2026/116557 (04.06.2026 Gazette 2026/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.11.2024 KR 20240171374**

(71) Applicant: **Korea Institute of Energy Research Daejeon 34129 (KR)**

(72) Inventors:
• **WOO, Jung-Je**
  **Gwangju 61084 (KR)**
• **MA, Jiyoung**
  **Busan 47383 (KR)**

• **SONG, Jinju**
  **Gwangju 61092 (KR)**
• **SONG, Ha Yong**
  **Gwangju 61003 (KR)**
• **SONG, Seok Hyun**
  **Gwangju 61003 (KR)**
• **JANG, Il Chan**
  **Gwangju 61027 (KR)**
• **SEO, Joon Kyo**
  **Daejeon 35243 (KR)**
• **PARK, Jeong-Sun**
  **Gwangju 61017 (KR)**
• **JANG, Geun Min**
  **Changwon-si, Gyeongsangnam-do 51484 (KR)**

(74) Representative: **Sander, Rolf**
  **IPNY AB**
  **Birger Jarlsgaten 99A**
  **11356 Stockholm (SE)**

(54) **METHOD FOR REMOVING HIGHLY ADHESIVE BINDER AND CARBON CONDUCTIVE MATERIAL WITHIN WASTE BATTERIES OR WASTE SCRAPS, AND METHOD FOR RECYCLING WASTE BATTERIES OR WASTE SCRAPS USING SAME**

(57)    The present invention relates to a method for removing a high-adhesion binder and a carbon conductive material from a waste battery or waste scrap including at least one selected from the group consisting of a positive electrode material and a negative electrode material, a high-adhesion binder containing fluorine, and a carbon conductive material, the method including mixing an additive with a pulverized waste battery or pulverized waste scrap to form a mixture, heat-treating the mixture to remove a high-adhesion binder and a carbon conductive material, and washing the mixture from which the high-adhesion binder and the carbon conductive material have been removed, wherein the additive is at least one selected from the group consisting of NaOH, KOH, Ca(OH)$_2$, and Mg(OH)$_2$.

FIG. 1

REMOVE BINDER AND CARBON CONDUCTIVE MATERIAL FROM
WASTE BATTERY OR WASTE SCRAP, FOLLOWED BY WASHING

↓

HEAT-TREAT RECOVERED POSITIVE ELECTRODE MATERIAL
OR RECOVERED NEGATIVE ELECTRODE MATERIAL

**Description**

## TECHINCAL FIELD

The present invention relates to technology for recycling a secondary battery, and more particularly, to technology for recycling a positive electrode material or negative electrode material by removing a high-adhesion binder and a conductive material from a waste battery or waste scrap.

## BACKGROUND OF THE INVENTION

Waste batteries and waste scrap are metallic materials produced after using a battery, and include important resources such as lithium, graphite, and silicon, and thus, have very important values as resources. Recycling these resources is a very important task in terms of environmental protection and resource efficiency. Battery waste contains toxic and harmful materials, and thus may cause serious environmental pollution if not properly treated, and in addition, it is essential to stably maintain a supply chain of resources such as lithium and graphite through recycling. Particularly, due to an increase in demand for electric vehicles and energy storage systems, demand for metallic and non-metallic resources is rapidly increasing, so that recycling is a key strategy for increasing the circular use and supply stability of resources.

Therefore, recycling waste batteries and waste scrap is becoming essential technology for securing environmental protection, resource efficiency, and economic benefits other than simple reduction of waste. In order to recycle waste batteries and waste scrap, the waste batteries or waste scrap should be crushed and pulverized, and impurities other than a positive electrode material and a negative electrode material should be removed. This is because if a positive electrode material or negative electrode material includes impurities, electrical properties of a positive electrode material and a negative electrode material produced through recycling are deteriorated. In order to remove a high-adhesion binder and a conductive material included in a positive electrode material and a negative electrode material, a method of using a solvent or performing heat-treatment at high temperatures is employed.

The method for removing impurities by using a solvent has problems in that the process is very complicated, and the process cost is very high. Particularly, a large amount of wastewater is produced during the process, thereby causing environmental pollution, so that regulations are becoming increasingly strict. The high-temperature heat-treatment is performed at 600 °C to 700 °C to remove a carbon conductive material. However, during this process, there may be a problem in that a positive electrode material or negative electrode material is damaged due to decomposition of a high-adhesion binder containing fluorine.

In order to solve this problem, typically, LiOH is added to a pulverized material of a waste battery and waste scrap before performing heat-treatment. However, even when LiOH is added, it still requires a high temperature of 600 °C or higher in order to remove a carbon conductive material, and during this process, fluorine is explosively released, thereby causing partial damage to a positive electrode material or negative electrode material. In addition, it is difficult to remove LiF, which is produced when LiOH removes fluorine, and as a result, there is a problem in that the LiF becomes another impurity and reduces performance of a positive electrode material or negative electrode material.

Therefore, in order to solve the problem in that fluorine contained in a high-adhesion binder is released at high temperatures, it is necessary to lower the temperature at which a carbon conductive material is removed. Meanwhile, in order for recycling of waste batteries or waste scrap to become commercialized, economic feasibility needs to be secured. However, there are problems in that LiOH is expensive, and performing heat-treatment at 600 °C to 700 °C for several hours to remove a carbon conductive material is highly energy-intensive.

Ultimately, in order to minimize damage to a positive electrode material or negative electrode material, reduce energy consumption, and increase economic efficiency, there is a need for a method for lowering the temperature at which a conductive material and a binder are removed from a waste battery and waste scrap.

## DESCRIPTION OF THE INVENTION

## TECHNICAL PROBLEM

An objective of the present invention is to provide technology capable of recycling a high-purity positive electrode material or negative electrode material without deterioration by effectively removing a high-adhesion binder and a carbon conductive material while minimizing damage to a positive electrode material in a waste battery or waste scrap.

In addition, an objective of the present invention is to propose novel technology capable of increasing economic feasibility of waste battery or waste scrap recycling technology.

Meanwhile, other objectives of the present invention that are not specified will be further considered within the scope that can be easily derived from the following detailed description and the effects thereof.

**SOLUTION TO THE TECHNICAL PROBLEM**

In order to achieve the objectives proposed above, the following solution means are proposed.

The present invention relates to a method for removing a high-adhesion binder and a carbon conductive material from a waste battery or waste scrap including at least one selected from a positive electrode material and a negative electrode material, a high-adhesion binder containing fluorine, and a carbon conductive material.

A method for removing a high-adhesion binder and a carbon conductive material in a waste battery or waste scrap according to an embodiment of the present invention includes mixing an additive with a pulverized waste battery or pulverized waste scrap to form a mixture, heat-treating the mixture to remove a high-adhesion binder and a carbon conductive material, and washing the mixture from which the high-adhesion binder and the carbon conductive material have been removed, wherein the additive is at least one selected from the group consisting of NaOH, KOH, $Ca(OH)_2$, and $Mg(OH)_2$.

In an embodiment, the method may be characterized in that the heat-treating of the mixture is performed at 380 °C to lower than 600 °C.

In an embodiment, the method may be characterized in that the heat-treating of the mixture is performed at 400 °C to 500 °C.

In an embodiment, the method may be characterized in that during the heat-treating of the mixture, the carbon conductive material is burned.

In an embodiment, the method may be characterized in that when the additive is NaOH or KOH, the content of the additive is 1 to 2.67 to the content of fluorine (F) in the waste battery or waste scrap, and when the additive is $Ca(OH)_2$ or $Mg(OH)_2$, the content of the additive is such that the element ratio of Ca or Mg to fluorine (F) in the waste battery or waste scrap is 0.5 to 1.33.

In an embodiment, the method may be characterized in that when the additive is NaOH or KOH, the content of the additive is such that the element ratio of Na or K to fluorine (F) in the waste battery or waste scrap is 1.33 to 2.67, and when the additive is $Ca(OH)_2$ or $Mg(OH)_2$, the content of the additive is such that the element ratio of Ca or Mg to fluorine (F) in the waste battery or waste scrap is 0.67 to 0.84.

In an embodiment, the method may be characterized in that the high-adhesion binder is any one selected from the group consisting of polyvinylidene fluoride (PVDF), polyvinyl fluoride (PVF), polytetrafluoroethylene (PTFE), and fluoroethylene vinyl ether (FEVE).

In an embodiment, the method may be characterized by further including, after the forming of the mixture, mixing the mixture to coat the additive on the surface of the pulverized waste battery or waste scrap.

A method for recycling a waste battery or waste scrap according to another embodiment of the present invention may be characterized by including (a) removing a binder and a carbon conductive material from a waste battery or waste scrap, followed by washing to recover a positive electrode material or negative electrode material, and (b) heat-treating the recovered positive electrode material or negative electrode material to restore a structure, wherein the step (a) includes mixing an additive with a pulverized waste battery or pulverized waste scrap to form a mixture, heat-treating the mixture to remove a high-adhesion binder and a carbon conductive material, and washing the mixture from which the high-adhesion binder and the carbon conductive material have been removed, wherein the additive is at least one selected from the group consisting of NaOH, KOH, $Ca(OH)_2$, and $Mg(OH)_2$.

In another embodiment, the method may be characterized in that the heat-treating the recovered positive electrode material to restore a structure is performed at 200 °C to 800 °C, and the heat-treating the recovered negative electrode material to restore a structure is performed at 600 °C to 1,200 °C.

**ADVANTAGEOUS EFFECTS**

A method for removing a high-adhesion binder and a carbon conductive material in a waste battery or waste scrap according to an embodiment of the present invention uses NaOH, KOH, $Ca(OH)_2$, and $Mg(OH)_2$, which are cheaper than LiOH, as an additive to reduce the temperature at which the carbon conductive material is removed, and thus may increase economic feasibility of waste battery or waste scrap recycling technology, and prevents a fluorine compound (HF, $F_2$) from being explosively produced due to decomposition of the high-adhesion binder containing fluorine at high temperatures, and thus may improve performance of a recycled positive electrode material or negative electrode material.

In addition, a method for removing a high-adhesion binder and a carbon conductive material in a waste battery or waste scrap according to an embodiment of the present invention uses NaOH, KOH, $Ca(OH)_2$, and $Mg(OH)_2$ to remove fluorine (F) produced in a decomposition process of the high-adhesion binder containing fluorine, and thus has an effect of preventing a positive electrode material or negative electrode material from being damaged by fluorine.

Meanwhile, although not explicitly stated herein, it should be understood that effects described in the following specification that are expected by the technical features of the present invention and their provisional effects are treated as described in the specification of the present invention.

**BRIEF DESCRIPTION OF THE DRAWINGS**

FIG. 1 is a schematic flowchart of a method for recycling a waste battery or waste scrap of the present invention.

FIG. 2 is a schematic flowchart of a method for removing a high-adhesion binder and a carbon conductive material in a waste battery or waste scrap according to an embodiment of the present invention.

FIGS. 3 and 4 are reference diagrams illustrating each step of a method for removing a high-adhesion binder and a carbon conductive material in a waste battery or waste scrap according to an embodiment of the present invention.

FIG. 5 is a result of confirming the burning of a carbon conductive material through thermogravimetric analysis (TGA) after mixing waste scrap and an additive, and coating pulverized waste scrap with the additive using a planetary mixer, wherein (a) shows a TGA analysis result when LiOH, NaOH, and KOH are each used as an additive, and (b) shows a TGA analysis result when $Ca(OH)_2$ and $Mg(OH)_2$ are each used as an additive.

FIG. 6 is a result of confirming the removal of fluorine by an additive through X-ray Diffraction (XRD) analysis after mixing waste scrap and an additive, and coating pulverized waste scrap with the additive using a planetary mixer, and then performing heat-treatment at 400 °C to remove a binder and a carbon conductive material, wherein (a) shows an XRD analysis result when LiOH, NaOH, and KOH are each used as an additive, and (b) shows an XRD analysis result when $Ca(OH)_2$ and $Mg(OH)_2$ are each used as an additive.

FIG. 7 is a result of performing TGA analysis on each sample after heat-treatment and washing to measure an amount of residual impurities of the samples according to the temperature of heat-treatment for removing a binder and a carbon conductive material.

FIG. 8 is a result of performing an electrochemical test by using samples according to the temperature of heat-treatment for removing a binder and a carbon conductive material.

FIG. 9 is a result of measuring the capacity of a recycled positive electrode material according to the content of an additive.

FIG. 10 shows a scanning electron microscopy (SEM) image of each of a positive electrode in a clean state and a waste positive electrode material.

FIG. 11 shows SEM images after heat-treatment and after washing respectively showing when no additive is added, when an additive is simply mixed, and when an additive is coated on a pulverized material.

FIG. 12 is a result of measuring an amount of residual impurities by performing TGA analysis on a sample after adding a positive electrode material in a clean state and then performing heat-treatment and washing, after adding a waste positive electrode material and then performing heat-treatment and washing, after performing heat-treatment and washing without adding an additive, after simply mixing an additive and then performing heat-treatment and washing, and after coating an additive on a pulverized material and then performing heat-treatment and washing.

FIG. 13 shows results of performing electrochemical analysis on a sample after adding a positive electrode material in a clean state and then performing heat-treatment and washing, after performing heat-treatment and washing without adding an additive, after simply mixing an additive and then performing heat-treatment and washing, and after coating an additive on a pulverized material and then performing heat-treatment and washing.

The accompanying drawings are exemplified by reference for an understanding of the technical idea of the present invention, and the scope of the present invention is not limited thereto.

**DETAILED DESCRIPTION OF PREFERRED EMBODIMENTS**

Hereinafter, with reference to the drawings, the configuration of the present invention guided by various embodiments of the present invention, and effects resulting from the configuration will be described. In describing the present invention, detailed descriptions of related known functions will be omitted when it is determined that the detailed descriptions may unnecessarily obscure the gist of the present invention that is apparent to those skilled in the art.

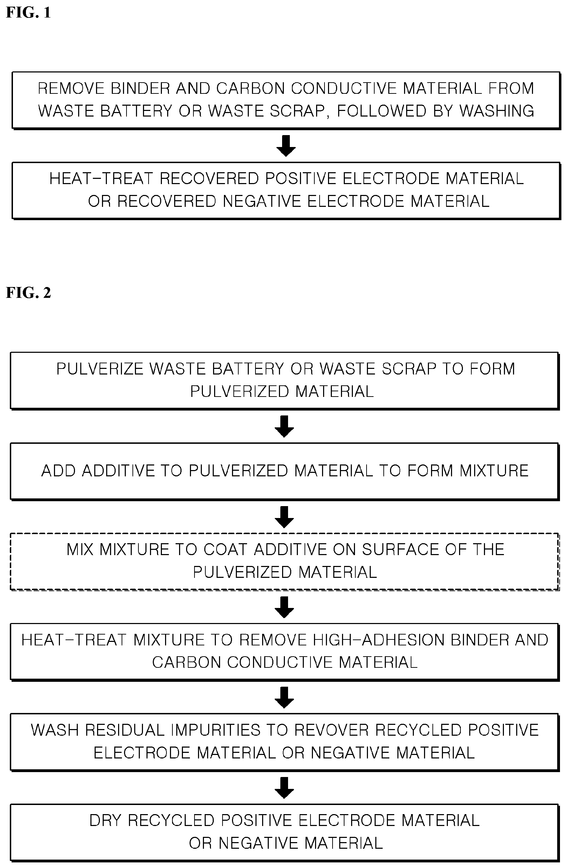

FIG. 1 is a schematic flowchart of a method for recycling a waste battery or waste scrap of the present invention.

The method for recycling a waste battery or waste scrap of the present invention includes removing a binder and a carbon conductive material from a waste battery or waste scrap, followed by washing to recover at least one of a positive electrode material and a negative electrode material, and heat-treating at least one of the recovered positive electrode material and the recovered negative electrode material to restore a structure.

The restoring of a structure of the recovered positive electrode material is performed by heat-treatment at 200 °C to 800 °C under an atmosphere of oxygen, air, nitrogen, or the like. In addition, the restoring of a structure of the recovered positive electrode material is performed by heat-treatment at 600 °C to 1,200 °C under an atmosphere of oxygen, air, nitrogen, or the like. However, the present invention is not limited thereto, and a suitable restoring process may be performed according to the type of a positive electrode material or negative electrode material.

While it is important to secure performance of the recovered positive electrode material or negative electrode material by restoring a damaged structure through heat-treatment, impurities should be minimized in the process of removing a high-adhesion binder containing fluorine and a carbon conductive material from a waste battery and waste scrap, and a positive electrode material or negative electrode material should be prevented from being damaged in this process. This is because if impurities are not removed, or a positive electrode material or negative electrode material is damaged, it is difficult to achieve sufficient performance even when heat-treatment is performed to restore a structure of the recovered positive electrode material or negative electrode material.

The most commonly used high-adhesion binder in a lithium secondary battery is polyvinylidene fluoride (PVDF). The PVDF is decomposed at about 380 ° C, and fluorine (F) is produced during the decomposition process. That is, a material such as HF or $F_2$ is formed, and a positive electrode material or negative electrode material is damaged by the material.

Meanwhile, a waste battery or waste scrap may include a carbon conductive material containing carbon such as carbon black, carbon nanotubes, and graphene in addition to a positive electrode material or negative electrode material. The carbon conductive material is burned and removed at a temperature of 600 °C to 700 °C under a gaseous atmosphere containing oxygen. For economic feasibility of recycling of a waste battery or waste scrap, it is necessary to lower a thermal decomposition atmosphere of a carbon conductive material.

Therefore, the present invention proposes a novel method for removing a high-adhesion binder and a carbon conductive material in a waste battery or waste scrap.

Hereinafter, the method for removing a high-adhesion binder and a carbon conductive material in a waste battery or waste scrap will be described with reference to the accompanying drawings.

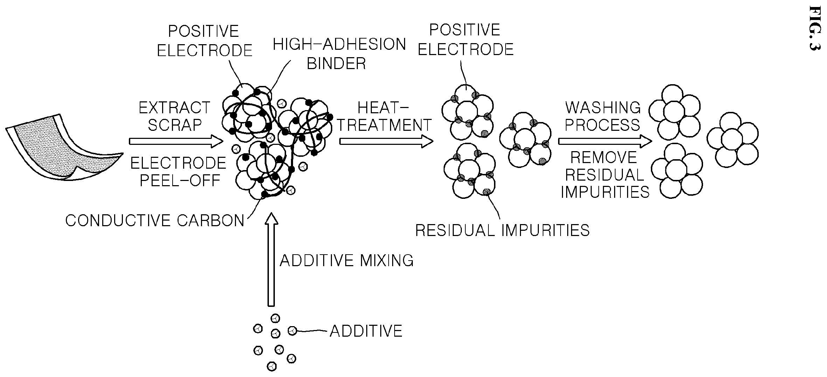

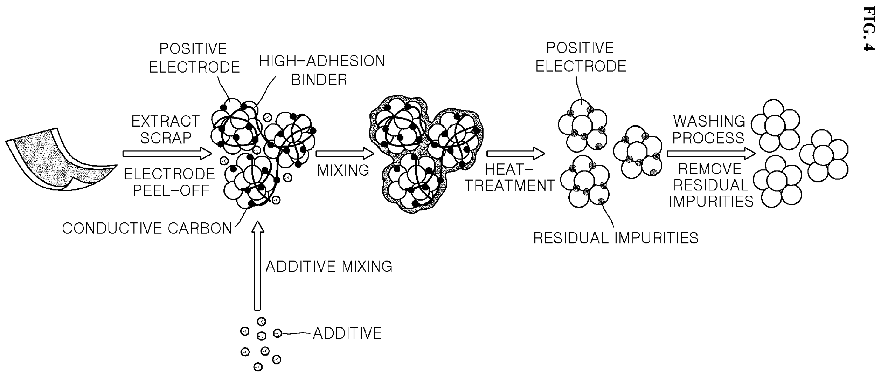

FIG. 2 is a schematic flowchart of a method for removing a high-adhesion binder and a carbon conductive material in a waste battery or waste scrap according to an embodiment of the present invention, and FIGS. 3 and 4 are reference diagrams illustrating each step of a method for removing a high-adhesion binder and a carbon conductive material in a waste battery or waste scrap according to an embodiment of the present invention.

The present invention relates to a method for removing a high-adhesion binder and a carbon conductive material from a waste battery or waste scrap including a positive electrode material, a high-adhesion binder containing fluorine, and a carbon conductive material while minimizing damage to a positive electrode material or a negative electrode material. In this case, the high-adhesion binder may be at least one selected from the group consisting of polyvinylidene fluoride (PVDF), polyvinyl fluoride (PVF), polytetrafluoroethylene (PTFE), and fluoroethylene vinyl ether (FEVE), and the carbon conductive material may be at least one selected from the group consisting of carbon black, carbon nanotubes, and graphene.

The method for removing a high-adhesion binder and a carbon conductive material in a waste battery or waste scrap according to an embodiment of the present invention includes pulverizing a waste battery or waste scrap to form a pulverized waste battery or pulverized waste scrap, mixing an additive with the pulverized waste battery or the pulverized waste scrap to form a mixture, heat-treating the mixture to remove a high-adhesion binder and a carbon conductive material, and washing the mixture from which the high-adhesion binder and the carbon conductive material are removed. After the washing is completed, it is possible to recover a recycled positive electrode material or a recycled negative electrode material, and in order to remove moisture, an additional drying step may be performed.

In this case, after the forming of a mixture, mixing the mixture to coat the additive on the surface of the pulverized waste battery or the pulverized waste scrap may be further performed.

First, the pulverizing of a waste battery or waste scrap to form a pulverized waste battery or pulverized waste scrap is performed. The pulverization may be performed after peeling an electrode off from the waste battery or the waste scrap. By pulverizing the waste battery or the waste scrap, the waste battery or the waste scrap are made into small particles, the contact area with the additive is maximized in subsequent treatment, and the efficiency of heat-treatment and washing processes is increased. The forming of a pulverized waste battery or the pulverized waste scrap may be performed by using a jaw crusher, a hammer mill, or a ball mill, but the present invention is not limited thereto.

Next, the mixing of an additive with the pulverized waste battery or the pulverized waste scrap to form a mixture is performed.

The additive may be at least one selected from the group consisting of NaOH, KOH, $Ca(OH)_2$, and $Mg(OH)_2$. Preferably, the additive may be any one selected from the group consisting of NaOH, KOH, and $Ca(OH)_2$.

NaOH, KOH, $Ca(OH)_2$, and $Mg(OH)_2$ have an effect of lowering the temperature at which the carbon conductive material decomposes. In general, a carbon conductive material is burned and removed at a temperature of 600 °C or higher. This is true even when LiOH is used as an additive. As described above, at a high temperature of 600 °C or higher, fluorine (F) contained in the high-adhesion binder is explosively released, thereby causing partial damage to a positive electrode material or negative electrode material despite the presence of LiOH.

However, NaOH, KOH, $Ca(OH)_2$, and $Mg(OH)_2$ each used as an additive in the present invention have an effect of lowering the temperature at which the carbon conductive material is burned. Since the temperature at which PVDF, which is a representative high-adhesion binder, decomposes is about 380 ° C, lowering the temperature at which the carbon conductive material is burned may lower a heat-treatment temperature. Lowering the heat-treatment temperature may solve the problem of explosive release of fluorine (F) contained in the high-adhesion binder, and reduces energy consumption, thereby increasing economic feasibility of waste battery or waste scrap recycling technology.

Furthermore, when NaOH, KOH, $Ca(OH)_2$, and $Mg(OH)_2$ are each used as an additive instead of LiOH, economic feasibility may be improved due to the price of the additive. Table 1 below shows prices of LiOH, NaOH, KOH, $Ca(OH)_2$, and $Mg(OH)_2$, which may each be used as an additive.

[Table 1]

| Additive | Price per 1 kg (10,000 KRW) |
|---|---|
| LiOH | 30 to 80 |
| NaOH | 1 to 3 |
| KOH | 2 to 5 |
| $Ca(OH)_2$ | 1 to 3 |
| $Mg(OH)_2$ | 2 to 6 |

As shown in Table 1, LiOH is more than 10 times more expensive than NaOH, KOH, $Ca(OH)_2$, and $Mg(OH)_2$, and thus deteriorates the economic feasibility of waste battery or waste scrap recycling technology. In the case of the present invention, since NaOH, KOH, $Ca(OH)_2$, and $Mg(OH)_2$, which are cheaper than LiOH, is each used as an additive, there is an effect of improving the economic feasibility of waste battery and waste scrap recycling technology.

NaOH, KOH, $Ca(OH)_2$, and $Mg(OH)_2$ have an effect of trapping a fluorine compound (HF, $F_2$) produced in a process in which a high-adhesion binder containing fluorine decomposes. The role of each additive in a process in which PVDF decomposes is as follows.

[Reaction Equation 1]

$$NaOH: C_2H_2F_2 + 2\ NaOH \rightarrow 2\ NaF + 2\ CO_2 + H_2O$$

$$KOH: C_2H_2F_2 + 2\ KOH \rightarrow 2\ KF + 2\ CO_2 + H_2O$$

$$Ca(OH)^2: C_2H_2F_2 + Ca(OH)_2 \rightarrow CaF_2 + 2\ CO_2 + H_2O$$

$$Mg(OH)_2: C_2H_2F_2 + Mg(OH)_2 \rightarrow MgF_2 + 2\ CO_2 + H_2O$$

More preferably, NaOH may be used as an additive. When NaOH is used as the additive, NaOH is significantly cheaper than LiOH, has an effect of removing fluorine (F) produced during a process of decomposing the high-adhesion binder containing fluorine, and has an effect of completely decomposing the carbon conductive material even at a temperature of about 400 °C, and particularly, all of NaF, $Na_2CO_3$, and residual NaOH, which are produced during a process of removing the high-adhesion binder and the carbon conductive material, have high solubility in water, and thus may be easily removed by washing.

The content of the additive is as follows. When the additive is NaOH or KOH, the content of the additive may be such that the element ratio of Na or K to fluorine (F) in the waste battery or waste scrap is 1 to 2.67, and when the additive is $Ca(OH)_2$ or $Mg(OH)_2$, the content of the additive may be such that the element ratio of Ca or Mg to fluorine (F) in the waste battery or waste scrap is 0.5 to 1.33. If the content of the additive is below the lower limit, the amount of metal (Na, K, Ca, or Mg) that can capture fluorine is theoretically insufficient compared to fluorine (F) contained in the waste scrap or waste battery, so that the fluorine (F) damages the positive electrode material. If the content of the additive is above the upper limit, an effect of not damaging the positive electrode material or negative electrode material remains the same, but due to an increase in impurities, there may be a risk of a slight decrease in performance of a recycled positive electrode material or negative electrode material.

More preferably, when the additive is NaOH or KOH, the content of the additive is such that the element ratio of Na or K to fluorine (F) in the waste battery or waste scrap is 1.33 to 2.67, and when the additive is $Ca(OH)_2$ or $Mg(OH)_2$, the content of the additive is such that the element ratio of Ca or Mg to fluorine (F) in the waste battery or waste scrap is 0.67 to 1.33. If the additive is mixed such that the element ratio of F to Na or K is 1:1, or the element ratio of F to Ca or Mg is 1:0.5, theoretically all fluorine (F) is captured by an added metal (M), but practically, due to a non-uniform reaction, a positive electrode material or negative electrode material is inevitably damaged by fluorine (F). As shown in experimental results described later, if a sufficient amount of additive is added such that the element ratio of F to Na or K is 1:1 or higher, or the element ratio of F to Ca or Mg is 1:0.5 or higher, the performance is equivalent to that of a positive electrode material or negative electrode material in a normal state.

Meanwhile, the upper limit of the content of the additive may be higher than that described above. When the upper limit of the content of the additive further increases, performance may slightly decrease compared to that of a positive electrode material or negative electrode material in a normal state due to an increase in impurities, but even so, the performance may be higher than that of a waste positive electrode recycled with an organic solvent.

After forming the mixture and before heat-treatment, coating the additive on the pulverized waste battery or pulverized waste scrap with the additive through mixing may be further performed. The mixing may be performed by using a planetary mixer, but the present invention is not limited thereto. When the mixing is performed, the additive is evenly coated on the surface of the pulverized waste battery or the pulverized waste scrap by frictional heat. In this case, the coating does not necessarily mean that the additive completely covers the pulverized waste battery or the pulverized waste scrap, but rather means that the additive is evenly formed on at least a portion of the surface of the pulverized waste battery or pulverized waste scrap. When the additive is coated on the pulverized waste battery or the pulverized waste scrap as described above, the high-adhesion binder and the carbon conductive material may be removed more in a heat-treatment process to be described later, and damage to the positive electrode material due to fluorine (F) may be better prevented.

After the additive is mixed with or coated on the pulverized waste battery or the pulverized waste scrap, heat-treatment is performed to remove the high-adhesion binder and the carbon conductive material. The heat-treatment temperature may be 380 °C or higher to lower than 600 °C, preferably 400 °C to 500 °C, and more preferably 400 °C. The temperature at which the high-adhesion binder containing fluorine decomposes is about 380 °C based on PVDF, and the temperature at which a carbon conductive material without the additive of the present invention decomposes is 600 °C or higher. However, the method for removing a high-adhesion binder and a carbon conductive material in a waste battery or waste scrap of the present invention lowers the temperature at which a carbon conductive material is burned due to at least one additive selected from the group consisting of NaOH, KOH, Ca(OH)$_2$, and Mg(OH)$_2$, so that the carbon conductive material is burned and removed at a temperature lower than 600 °C, and the high-adhesion binder is also decomposed. The pyrolysis may be performed in an air atmosphere, and the pyrolysis duration may be 2 to 4 hours.

In addition, the additive of the present invention also has an effect of lowering the decomposition temperature of the high-adhesion binder, as well as an effect of lowering the decomposition temperature of the carbon conductive material. Therefore, even at a temperature lower than 600 °C, the high-adhesion binder is removed better than when there is no additive.

After the pyrolysis is performed, fluorides and carbonates of metals (M: Na, K, Ca, Mg) contained in the additive, as well as some portions of the additive, remain as residual impurities. The residual impurities are removed through washing, and through this process, only a recycled positive electrode material or negative electrode material remains. The washing may be performed by using excess deionized water.

Next, the recycled positive electrode material or negative electrode material is dried.

When the drying is completed, the recycled positive electrode material or negative electrode material may undergo reheat-treatment for structural restoration. In the case of the positive electrode material, the reheat-treatment may be performed at 200 °C to 800 °C in a gaseous atmosphere containing oxygen, and in the case of the negative electrode material, the reheat-treatment is performed at 600 °C to 1,200 °C in a gaseous atmosphere containing oxygen.

## Example

Waste scrap, from which an electrode including 94 wt% of NCM622 as a positive electrode material, 3 wt% of PVDF as a high-adhesion binder, and 3 wt% of carbon black as a carbon conductive material was removed, was pulverized. NaOH, KOH, Ca(OH)$_2$, and Mg(OH)$_2$ were each prepared as an additive of Example, and LiOH was prepared as an additive of Comparative Examples. In the case of NaOH and KOH, the additive was prepared such that the element ratio of fluorine to a metal (Na, K) included in the waste scrap was 0, 0.67, 1, 1.33, 2, and 2.67, and in the case of Ca(OH)$_2$ and Mg(OH)$_2$, the additive was prepared such that the element ratio of fluorine to a metal (Ca, Mg) included in the waste scrap was 0, 0.33, 0.5, 0.67, 1, and 1.33.

The waste scrap and the additive were mixed to prepare a mixture. The mixing was performed by using a mortar pestle to prepare the mixture.

For some samples, the mixing was performed by using a planetary mixer to prepare a mixture. The mixing was performed at 2000 rpm for 12 minutes, and the additive was coated on the surface of the pulverized waste scrap by frictional heat generated during this process.

A waste scrap mixture coated with the mixture or the additive was heat-treated in a box furnace. The heat-treatment was performed at 350 °C, 400 °C, 500 °C, and 600 °C.

After the heat-treatment, 2 g of the heat-treated mixture and 100 ml of deionized water were stirred in a 250 ml beaker for 10 minutes, filtered, and then washed to obtain a recycled positive electrode material.

The recycled positive electrode material was dried in a convection oven at 50 °C for 1 hour, and then dried in a vacuum oven at 80°C for 6 hours or more to completely remove moisture.

The dried recycled positive electrode material was heat-treated in a box furnace in an oxygen atmosphere at 500 °C for 6 hours to restore a positive electrode material structure.

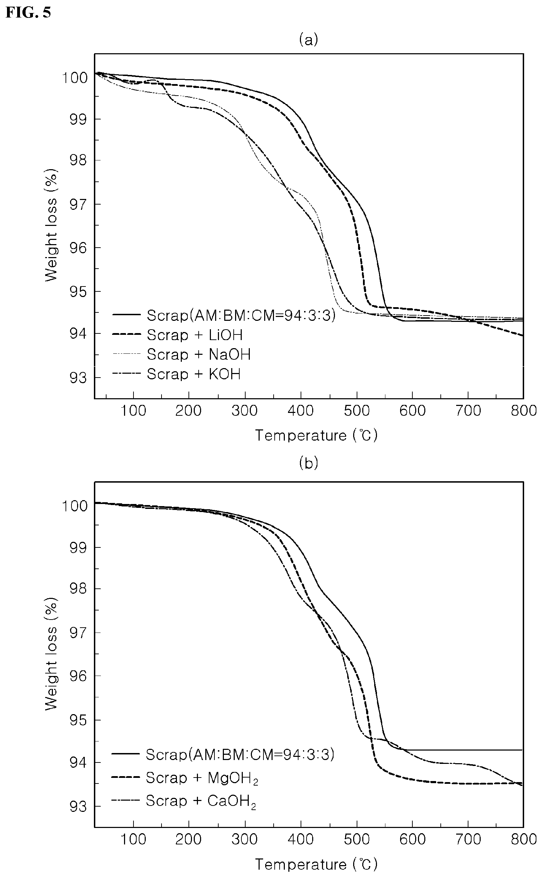

FIG. 5 is a result of confirming the burning of a carbon conductive material through TGA after mixing waste scrap and an additive, and coating pulverized waste scrap with the additive using a planetary mixer, wherein (a) shows a TGA analysis result when LiOH, NaOH, and KOH are used as an additive, and (b) shows a TGA analysis result when $Ca(OH)_2$ and $Mg(OH)_2$ are each used as the additive.

In FIG. 5, in the case of LiOH, NaOH, and KOH, the additive was mixed such that the element ratio of fluorine to a metal (Na, K) included in the waste scrap is 1, and in the case of $Ca(OH)_2$ and $Mg(OH)_2$, the additive was mixed such that the element ratio of fluorine to a metal (Ca, Mg) included in the waste scrap is 0.5.

The black color in FIGS. 5(a) and 5(b) represents a TGA analysis result for waste scrap without any additive. The blue line in FIG. 5(a) represents that LiOH is used as an additive, and shows almost the same result as the TGA analysis result for the waste scrap without any additive.

In comparison, in the case of Example, it can be confirmed that mass reduction occurs at a lower temperature. This is because the additive, NaOH, KOH, $Ca(OH)_2$ or $Mg(OH)_2$, lowers the temperature at which the carbon conductive material is burned.

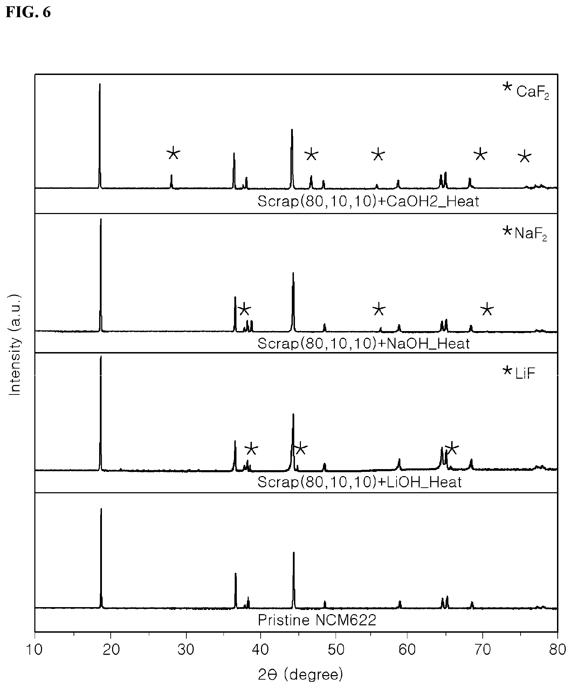

FIG. 6 is a result of confirming the removal of fluorine by an additive through XRD analysis after mixing waste scrap and an additive, and coating pulverized waste scrap with the additive using a planetary mixer, and then performing heat-treatment at 400 °C to remove a binder and a carbon conductive material, wherein LiOH, NaOH, and $Ca(OH)_2$ are each used as the additive.

In FIG. 6, when LiOH and NaOH were each used as an additive, the additive was mixed such that the element ratio of fluorine to a metal (Na) included in the waste scrap is 1, and when $Ca(OH)_2$ was used as an additive, the additive was mixed such that the element ratio of fluorine to a metal (Ca) included in the waste scrap is 0.5, followed by being heat-treated at 400°C in an oxygen atmosphere.

Referring to FIG. 6, it can be seen that when LiOH, NaOH, or $Ca(OH)_2$ is used as an additive, a metal (M) included in the additive reacts with fluorine (F) to form a fluoride such as MF or $MF_2$. That is, the additive captures fluorine (F) produced during the decomposition process of a high-adhesion binder containing fluorine to prevent a positive electrode material from being damaged.

Table 2 below shows the evaluation of performance of a recycled positive electrode material prepared using an organic solvent (Comparative Example 1), a recycled positive electrode material prepared by mixing LiOH as an additive with pulverized waste scrap, coating the additive on the pulverized waste scraps through mixing, performing heat-treatment in an oxygen atmosphere at 600 °C, followed by washing and drying (Comparative Example 2), and a recycled cathode material prepared by mixing NaOH as an additive with pulverized waste scrap, coating the additive on the pulverized waste scrap through mixing, performing heat-treatment in an oxygen atmosphere at 400 °C, followed by washing and drying.

[Table 2]

|  | Specific Charge Capacity [mAh/g] | Specific Discharge Capacity [mAh/g] | Efficiency [%] |
|---|---|---|---|
| Comparative Example 1 | 188.26 | 169.15 | 89.84 |
| Comparative Example 2 | 175.89 | 153.04 | 87.00 |
| Example | 183.38 | 167.98 | 91.60 |
| Waste scrap | 164.83 | 137.50 | 83.42 |

In comparison, Example in which NaOH was used as the additive, and the heat-treatment was performed at 400 °C to remove the high-adhesion binder and the carbon conductive material, had a good charge capacity of 183.38 mAh/g, and a discharge capacity of 167.98 mAh/g, and thus had the highest efficiency of 91.60%. In the case of Example, the result of measuring residual impurities after the heat-treatment through TGA analysis showed about 95 wt% of impurities were removed, and 99.5 wt% of the impurities were removed after washing. That is, it can be seen that a Na compound produced in the heat-treatment process was completely removed by the washing using deionized water.

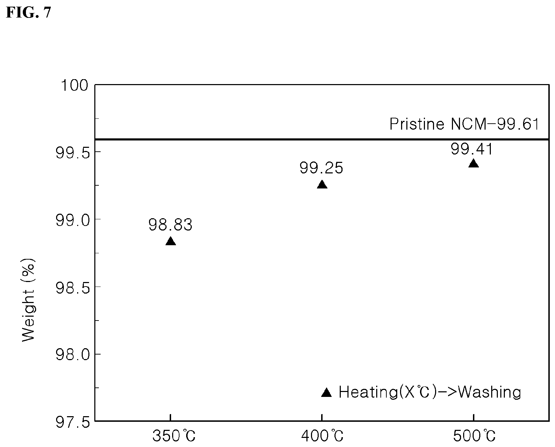

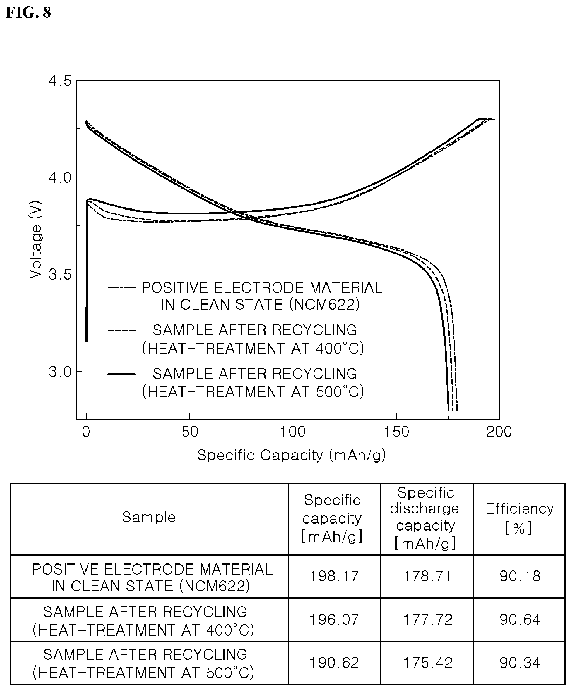

FIG. 7 is a result of performing TGA analysis on each sample after heat-treatment and washing to measure an amount of residual impurities of the samples according to the temperature of heat-treatment for removing a binder and a carbon conductive material, and FIG. 8 is a result of performing an electrochemical test by using samples according to the temperature of heat-treatment for removing a binder and a carbon conductive material.

FIG. 7 and FIG. 8 show the results for recycled positive electrode materials each prepared by using NaOH as an additive, adding and mixing the additive in a content such that the element ratio of fluorine to a metal (Na) included in the waste scrap was 1, coating the additive through mixing on pulverized waste scrap, performing heat-treatment at 400 °C in an oxygen atmosphere, followed by washing and drying.

As shown in FIG. 7, when the heat-treatment temperature is 350 °C, it can be seen that there is still a considerable amount of impurities. When the heat-treatment temperature is 400 °C or 500 °C, 99.5 wt% or greater of impurities are removed.

Referring to FIG. 8, it can be seen that when the heat-treatment temperature is 400 °C and 500 ° C, the performance of the recycling positive electrode material is almost equivalent to that of the positive electrode material in a clean state. However, the performance is slightly better when the heat-treatment temperature is 400 °C than when it is 500 °C, and this is because the higher the temperature, the faster the production of a fluorine compound produced in the high-adhesion binder.

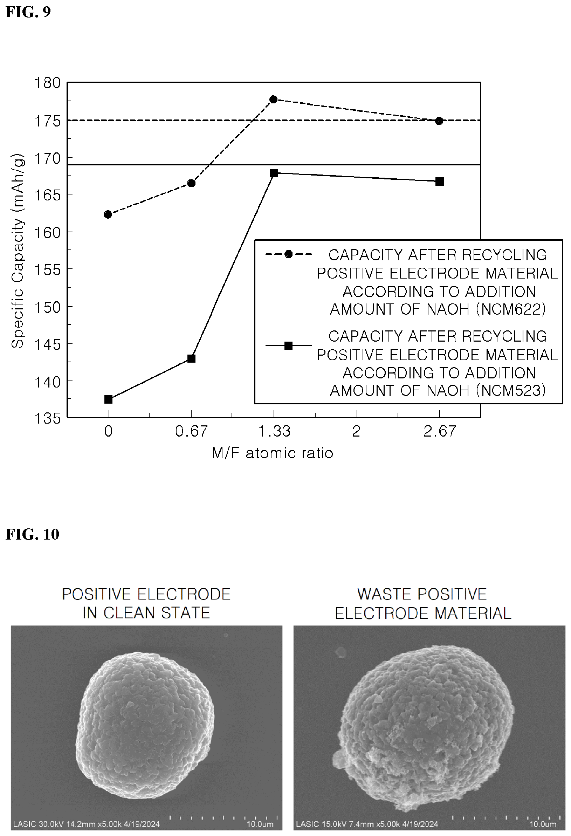

FIG. 9 is a result of measuring the capacity of a recycled positive electrode material according to the content of an additive.

FIG. 9 shows the results for recycled positive electrode materials prepared by using each of NCM622 and NCM523 as a positive electrode material, using NaOH as an additive, adding and mixing the additive in a content such that the element ratio of fluorine to a metal (Na) included in the waste scrap was 0, 0.67, 1.33, and 2,67, coating the additive through mixing on pulverized waste scrap, performing heat-treatment at 400 °C in an oxygen atmosphere, followed by washing and drying.

A reference capacity for NCM622 was based on a positive electrode material in a normal state, and a reference capacity for NCM523 was based on a positive electrode material in a recycled normal state. For reference, an actual waste positive electrode recycled with an organic solvent also exhibits performance similar to that of a positive electrode in a normal state.

Referring to FIG. 9, it can be seen that the recycled positive electrode material in which the element ratio of the additive metal to fluorine (M/F) was less than 1 exhibits performance significantly lower than the reference capacity. However, the recycled positive electrode material in which the element ratio (M/F) of the additive metal to fluorine (M/F) was 1.33 or greater exhibits performance equivalent to or better than the reference capacity. As the content of the additive increases, the performance of the recycled positive electrode material slightly decreases, and when the element ratio (M/F) of the additive metal to fluorine is greater than 2.67, increasing the additive content reduces economic feasibility and also causes a decrease in performance.

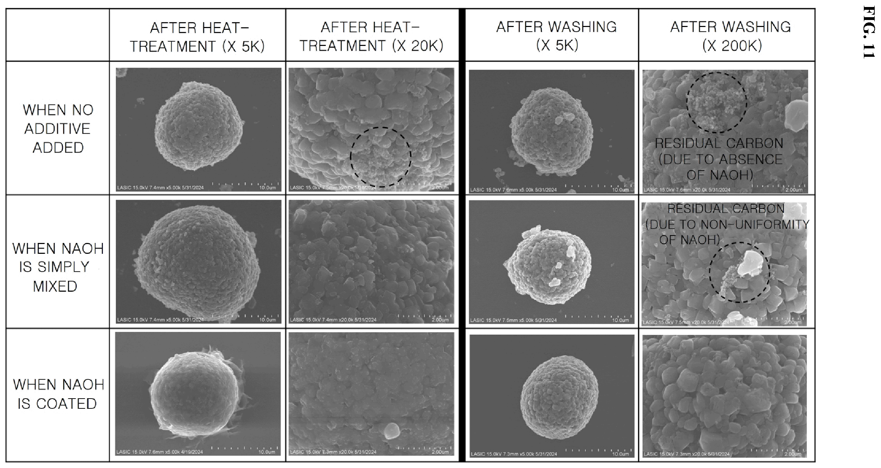

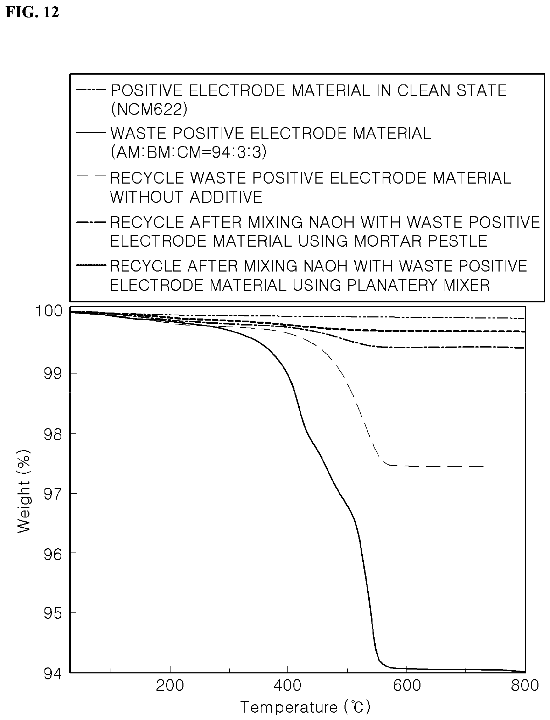

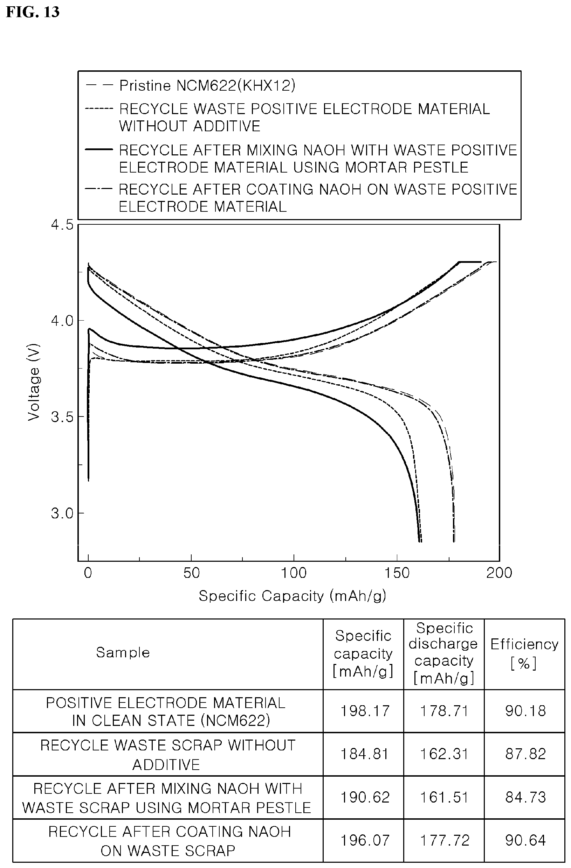

FIG. 10 shows a scanning electron microscopy (SEM) image of each of a positive electrode in a clean state and a waste positive electrode material, FIG. 11 shows SEM images after heat-treatment and after washing respectively showing when no additive is added, when an additive is simply mixed, and when an additive is coated on a pulverized material, FIG. 12 shows results of measuring an amount of residual impurities by performing TGA analysis on a sample after adding a positive electrode material in a clean state and then performing heat-treatment and washing, after adding a waste positive electrode material and then performing heat-treatment and washing, after performing heat-treatment and washing without adding an additive, after simply mixing an additive and then performing heat-treatment and washing, and after coating an additive on a pulverized material and then performing heat-treatment and washing, and FIG. 13 shows results of performing electrochemical analysis on a sample after adding a positive electrode material in a clean state and then performing heat-treatment and washing, after performing heat-treatment and washing without adding an additive, after simply mixing an additive and then performing heat-treatment and washing, and after coating an additive on a pulverized material and then performing heat-treatment and washing. In FIG. 10 to FIG. 13, the additive was added in an amount to meet the element ratio (M/F) of the additive metal to fluorine, wherein the heat-treatment temperature was 400 ° C, and washing and drying were performed in the same manner.

First, referring to FIG. 10, only the shape of a positive electrode can be seen in the clean positive electrode material, but it can be confirmed that the conductive carbon (small dots) and the binder (translucent portions) are present in the waste positive electrode material.

Referring to FIG. 11, when an additive is not added, it can be seen that the conductive carbon remains despite the heat-treatment at 400 °C due to the absence of the additive after the heat-treatment and after the washing. In addition, when the additive is simply mixed with the mortar pestle, it can be confirmed that the carbon conductive material remains even after the washing. When the additive was coated through mixing, it can be confirmed that the material is in the same state as the positive electrode material in a clean state both after the heat-treatment and after the washing.

Referring to FIG. 12, it can be confirmed that when an additive is not added, 2.6 wt% of impurities remain, and it can be confirmed that when the additive is simply mixed, 0.6 wt% of impurities remain. This is partly because the additive (NaOH) does not serve as a catalyst for the burning of the carbon conductive material due to a non-uniform reaction. It can be confirmed that 0.3 wt% of impurities remains when the additive was coated. That is, 99.5% of impurities were removed, which are removed during reheat-treatment for structural restoration.

Referring to FIG. 13, it can be confirmed that when the pulverized waste scrap was coated with the additive, the performance is almost equivalent to that of the positive electrode material in a clean state.

The scope of protection of the present invention is not limited to the descriptions and expressions of the embodiments explicitly described above. In addition, it should be added once again that the scope of protection of the present invention may not be limited due to obvious changes or substitutions in the technical field to which the present invention pertains.

**Claims**

1. A method for removing a high-adhesion binder and a carbon conductive material from a waste battery or waste scrap including at least one selected from the group consisting of a positive electrode material and a negative electrode material, a high-adhesion binder containing fluorine, and a carbon conductive material, the method comprising:

   mixing an additive with a pulverized waste battery or pulverized waste scrap to form a mixture;
   heat-treating the mixture to remove a high-adhesion binder and a carbon conductive material; and
   washing the mixture from which the high-adhesion binder and the carbon conductive material have been removed,
   wherein the additive is at least one selected from the group consisting of NaOH, KOH, $Ca(OH)_2$, and $Mg(OH)_2$.

2. The method of claim 1, wherein the heat-treating of the mixture is performed at 380 °C to lower than 600 °C.

3. The method of claim 1, wherein the heat-treating of the mixture is performed at 400 °C to 500 °C.

4. The method of claim 1, wherein during the heat-treating of the mixture, the carbon conductive material is burned.

5. The method of claim 1, wherein during the heat-treating of the mixture, at least one selected from the group consisting of NaF, KF, $CaF_2$, and $MgF_2$ is formed by being captured by fluorine produced as the high-adhesion binder decomposes and the additive.

6. The method of claim 1, wherein:

   when the additive is NaOH or KOH, the content of the additive is such that the element ratio of Na or K to fluorine (F) in the waste battery or waste scrap is 1 to 2.67; and
   when the additive is $Ca(OH)_2$ or $Mg(OH)_2$, the content of the additive is such that the element ratio of Ca or Mg to fluorine (F) in the waste battery or waste scrap is 0.5 to 1.33.

7. The method of claim 1, wherein:

   when the additive is NaOH or KOH, the content of the additive is such that the element ratio of Na or K to fluorine (F) in the waste battery or waste scrap is 1.33 to 2.67; and
   when the additive is $Ca(OH)_2$ or $Mg(OH)_2$, the content of the additive is such that the element ratio of Ca or Mg to fluorine (F) in the waste battery or waste scrap is 0.67 to 1.33.

8. The method of claim 1, wherein the high-adhesion binder is any one selected from the group consisting of polyvinylidene fluoride (PVDF), polyvinyl fluoride (PVF), polytetrafluoroethylene (PTFE), and fluoroethylene vinyl ether (FEVE).

9. The method of claim 1, further comprising, after the forming of the mixture, mixing the mixture to coat the additive on the surface of the pulverized waste battery or waste scrap.

10. A method for recycling a waste battery or waste scrap, the method comprising:

    (a) removing a binder and a carbon conductive material from a waste battery or waste scrap, followed by washing to recover at least one selected from the group consisting of a positive electrode material and a negative electrode material; and
    (b) heat-treating at least one selected from the group consisting of the recovered positive electrode material and the recovered negative electrode material to restore a structure,

wherein the step (a) includes:

mixing an additive with a pulverized waste battery or pulverized waste scrap to form a mixture;
heat-treating the mixture to remove a high-adhesion binder and a carbon conductive material; and
washing the mixture from which the high-adhesion binder and the carbon conductive material have been removed,
wherein the additive is at least one selected from the group consisting of NaOH, KOH, $Ca(OH)_2$, and $Mg(OH)_2$.

11. The method of claim 10, wherein:

the heat-treating of the recovered positive electrode material to restore a structure is performed at 200 °C to 800 °C; and
the heat-treating of the recovered negative electrode material to restore a structure is performed at 600 °C to 1,200 °C.

**FIG. 1**

> REMOVE BINDER AND CARBON CONDUCTIVE MATERIAL FROM
> WASTE BATTERY OR WASTE SCRAP, FOLLOWED BY WASHING

⬇

> HEAT-TREAT RECOVERED POSITIVE ELECTRODE MATERIAL
> OR RECOVERED NEGATIVE ELECTRODE MATERIAL

**FIG. 2**

> PULVERIZE WASTE BATTERY OR WASTE SCRAP TO FORM
> PULVERIZED MATERIAL

⬇

> ADD ADDITIVE TO PULVERIZED MATERIAL TO FORM MIXTURE

⬇

> MIX MIXTURE TO COAT ADDITIVE ON SURFACE OF THE
> PULVERIZED MATERIAL

⬇

> HEAT-TREAT MIXTURE TO REMOVE HIGH-ADHESION BINDER AND
> CARBON CONDUCTIVE MATERIAL

⬇

> WASH RESIDUAL IMPURITIES TO REVOVER RECYCLED POSITIVE
> ELECTRODE MATERIAL OR NEGATIVE MATERIAL

⬇

> DRY RECYCLED POSITIVE ELECTRODE MATERIAL
> OR NEGATIVE MATERIAL

**FIG. 3**

**FIG. 4**

**FIG. 5**

(a)

(b)

**FIG. 6**

**FIG. 7**

**FIG. 8**

| Sample | Specific capacity [mAh/g] | Specific discharge capacity [mAh/g] | Efficiency [%] |
|---|---|---|---|
| POSITIVE ELECTRODE MATERIAL IN CLEAN STATE (NCM622) | 198.17 | 178.71 | 90.18 |
| SAMPLE AFTER RECYCLING (HEAT-TREATMENT AT 400°C) | 196.07 | 177.72 | 90.64 |
| SAMPLE AFTER RECYCLING (HEAT-TREATMENT AT 500°C) | 190.62 | 175.42 | 90.34 |

**FIG. 9**

**FIG. 10**

POSITIVE ELECTRODE
IN CLEAN STATE

WASTE POSITIVE
ELECTRODE MATERIAL

**FIG. 11**

**FIG. 12**

**FIG. 13**

| Sample | Specific capacity [mAh/g] | Specific discharge capacity [mAh/g] | Efficiency [%] |
|---|---|---|---|
| POSITIVE ELECTRODE MATERIAL IN CLEAN STATE (NCM622) | 198.17 | 178.71 | 90.18 |
| RECYCLE WASTE SCRAP WITHOUT ADDITIVE | 184.81 | 162.31 | 87.82 |
| RECYCLE AFTER MIXING NAOH WITH WASTE SCRAP USING MORTAR PESTLE | 190.62 | 161.51 | 84.73 |
| RECYCLE AFTER COATING NAOH ON WASTE SCRAP | 196.07 | 177.72 | 90.64 |

## INTERNATIONAL SEARCH REPORT

| International application No. |
| --- |
| **PCT/KR2024/019473** |

### A. CLASSIFICATION OF SUBJECT MATTER

**H01M 10/54**(2006.01)i; **B09B 3/40**(2022.01)i; **B09B 3/70**(2022.01)i; **B09B 101/15**(2022.01)i

According to International Patent Classification (IPC) or to both national classification and IPC

### B. FIELDS SEARCHED

Minimum documentation searched (classification system followed by classification symbols)

H01M 10/54(2006.01); C01G 53/00(2006.01); C22B 1/02(2006.01); C22B 26/12(2006.01); C22B 3/06(2006.01); C22B 3/08(2006.01); H01M 4/131(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐 배터리 (waste battery), 회수 (recover), 열처리 (thermal treatment), 세척 (washing), 불소계 바인더 (fluorine-based binder)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2021-0150687 A (LG ENERGY SOLUTION, LTD.) 13 December 2021 (2021-12-13) abstract; claim 1; paragraphs [0048], [0052], [0053], [0056], [0057], [0063], [0066], [0068], [0071]-[0075], [0079]-[0081], [0103], [0104] | 1-11 |
| A | KR 10-2023-0107226 A (THE REGENTS OF THE UNIVERSITY OF CALIFORNIA) 14 July 2023 (2023-07-14) abstract; claim 1 | 1-11 |
| A | KR 10-2023-0031075 A (LG ENERGY SOLUTION, LTD.) 07 March 2023 (2023-03-07) abstract; claim 1 | 1-11 |
| A | KR 10-2023-0145567 A (MITSUBISHI MATERIALS CORPORATION) 17 October 2023 (2023-10-17) abstract; claim 1 | 1-11 |
| A | KR 10-2023-0145565 A (MITSUBISHI MATERIALS CORPORATION) 17 October 2023 (2023-10-17) abstract; claim 1 | 1-11 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 August 2025** | **13 August 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/019473** |

| Patent document cited in search report | | | Publication date (day/month/year) | Patent family member(s) | | | Publication date (day/month/year) |
| --- | --- | --- | --- | --- | --- | --- | --- |
| KR | 10-2021-0150687 | A | 13 December 2021 | CN | 115136386 | A | 30 September 2022 |
| | | | | CN | 115136386 | B | 13 May 2025 |
| | | | | EP | 4095982 | A1 | 30 November 2022 |
| | | | | JP | 2023-510361 | A | 13 March 2023 |
| | | | | JP | 7371263 | B2 | 30 October 2023 |
| | | | | US | 2023-0051670 | A1 | 16 February 2023 |
| | | | | WO | 2021-246606 | A1 | 09 December 2021 |
| KR | 10-2023-0107226 | A | 14 July 2023 | CN | 116457981 | A | 18 July 2023 |
| | | | | EP | 4226451 | A1 | 16 August 2023 |
| | | | | JP | 2023-546826 | A | 08 November 2023 |
| | | | | US | 12315899 | B2 | 27 May 2025 |
| | | | | US | 2023-0420760 | A1 | 28 December 2023 |
| | | | | US | 2024-0297357 | A1 | 05 September 2024 |
| | | | | WO | 2022-076904 | A1 | 14 April 2022 |
| KR | 10-2023-0031075 | A | 07 March 2023 | CN | 117063329 | A | 14 November 2023 |
| | | | | EP | 4358232 | A1 | 24 April 2024 |
| | | | | JP | 2024-515170 | A | 05 April 2024 |
| | | | | JP | 7648797 | B2 | 18 March 2025 |
| | | | | US | 2024-0356098 | A1 | 24 October 2024 |
| | | | | WO | 2023-027436 | A1 | 02 March 2023 |
| KR | 10-2023-0145567 | A | 17 October 2023 | AU | 2022-223890 | A1 | 25 August 2022 |
| | | | | CN | 117043366 | A | 10 November 2023 |
| | | | | EP | 4296389 | A1 | 27 December 2023 |
| | | | | JP | 2022-125565 | A | 29 August 2022 |
| | | | | JP | 7188474 | B2 | 13 December 2022 |
| | | | | TW | 202242150 | A | 01 November 2022 |
| | | | | US | 2024-0097226 | A1 | 21 March 2024 |
| | | | | WO | 2022-176712 | A1 | 25 August 2022 |
| KR | 10-2023-0145565 | A | 17 October 2023 | EP | 4296388 | A1 | 27 December 2023 |
| | | | | JP | 2022-125620 | A | 29 August 2022 |
| | | | | JP | 7243749 | B2 | 22 March 2023 |
| | | | | TW | 202249336 | A | 16 December 2022 |
| | | | | US | 2024-0128530 | A1 | 18 April 2024 |
| | | | | WO | 2022-176709 | A1 | 25 August 2022 |

Form PCT/ISA/210 (patent family annex) (July 2022)